(19) Europäisches Patentamt
European Patent Office
Office européen des brevets

(11) **EP 4 741 452 A1**

(12) **EUROPEAN PATENT APPLICATION**
published in accordance with Art. 153(4) EPC

(43) Date of publication:
**13.05.2026 Bulletin 2026/20**

(21) Application number: **24836048.9**

(22) Date of filing: **02.07.2024**

(51) International Patent Classification (IPC):
***C08J 11/12*** (2006.01)

(52) Cooperative Patent Classification (CPC):
**Y02W 30/62**

(86) International application number:
**PCT/JP2024/023970**

(87) International publication number:
**WO 2025/009535 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.07.2023 JP 2023109511**

(71) Applicant: **ASAHI KASEI KABUSHIKI KAISHA**
**Tokyo 100-0006 (JP)**

(72) Inventors:
• **UMEMURA Ryosuke**
**Tokyo 100-0006 (JP)**
• **FUSAMAE Toru**
**Tokyo 100-0006 (JP)**
• **ASANUMA Yuki**
**Tokyo 100-0006 (JP)**
• **SHIKANO Yasukazu**
**Tokyo 100-0006 (JP)**
• **MIYOSHI Takaaki**
**Tokyo 100-0006 (JP)**

(74) Representative: **Hoffmann Eitle**
**Patent- und Rechtsanwälte PartmbB**
**Arabellastraße 30**
**81925 München (DE)**

(54) **METHOD FOR ADJUSTING SHAPE OF WASTE MATERIAL, METHOD FOR TRANSPORTING WASTE MATERIAL, AND METHOD FOR PRODUCING RESIN COMPOSITION**

(57) A waste material shape adjustment method that is a method of adjusting a shape of a waste material that is to be recycled includes adjusting the shape of the waste material such that a ratio $W_1/W_2$ of bulk density $W_1$ of the waste material relative to bulk density $W_2$ of the waste material is 0.55 or more, given that the bulk density $W_1$ is defined as "mass $(kg/m^3)$ of the waste material per 1 $m^3$ of a container in a situation in which the waste material undergoes shape adjustment and is packed into the container" and the bulk density $W_2$ is defined as "mass $(kg/m^3)$ of the waste material per 1 $m^3$ of a container in a situation in which the waste material undergoes shape adjustment, is subsequently ground to a mass of less than 50 g per granule, and is then packed into the container".

*FIG. 1*

**Description**

TECHNICAL FIELD

The present disclosure relates to a shape adjustment method and a transportation method for a waste material that is to be recycled and also relates to a production method for a resin composition in which a resin waste material that has undergone shape adjustment by the shape adjustment method is used.

BACKGROUND

With increasing awareness of global environmental protection in recent years, there is on-going development of techniques related to recycling of various waste materials with aims of resource conservation and carbon neutrality, and efforts are being made to increase the efficiency of recycling.

For example, Patent Literature (PTL) 1 discloses a pre-treatment, reprocessing, or recycling method for plastic waste materials of various shapes that enables re-treatment of a large number of different plastic products by a gentle, efficient, and economical technique.

CITATION LIST

Patent Literature

PTL 1: JP 2010-509413 A

SUMMARY

(Technical Problem)

However, there is room for further improvement of current recycling methods in terms of improving transportation efficiency when a waste material is transported to a facility such as a recycling plant and regeneration efficiency when a waste material is regenerated at a recycling plant or the like.

Accordingly, an object of the present disclosure is to provide a waste material shape adjustment method that can improve transportation efficiency and regeneration efficiency of a waste material that is to be recycled, a transportation method for a waste material that has undergone shape adjustment by this waste material shape adjustment method, and a resin composition production method in which a resin waste material that has undergone shape adjustment by this waste material shape adjustment method is used.

(Solution to Problem)

Specifically, the present disclosure is as set forth below.

[1] A waste material shape adjustment method that is a method of adjusting a shape of a waste material that is to be recycled, comprising adjusting the shape of the waste material such that a ratio $W_1/W_2$ of bulk density $W_1$ of the waste material relative to bulk density $W_2$ of the waste material is 0.55 or more, given that the bulk density $W_1$ is defined as "mass of the waste material per 1 $m^3$ of a container, in units of $kg/m^3$, in a situation in which the waste material undergoes shape adjustment and is packed into the container" and the bulk density $W_2$ is defined as "mass of the waste material per 1 $m^3$ of a container, in units of $kg/m^3$, in a situation in which the waste material undergoes shape adjustment, is subsequently ground to a mass of less than 50 g per granule, and is then packed into the container".

[2] The waste material shape adjustment method according to [1], wherein the waste material that has undergone shape adjustment has a mass of not less than 50 g and not more than 50 kg per piece.

[3] The waste material shape adjustment method according to [1] or [2], wherein the waste material that has undergone shape adjustment has a cylinder, plate, cuboid, or cube shape.

[4] The waste material shape adjustment method according to any one of [1] to [3], wherein the waste material is a resin waste material.

[5] The waste material shape adjustment method according to [4], comprising a step of melting a resin in the resin waste material to obtain a melt of the resin waste material, discharging the melt into a formwork, and cooling and solidifying the melt, wherein the formwork has a cylinder, plate, cuboid, or cube shape.

[6] The waste material shape adjustment method according to [4] or [5], wherein the resin waste material is a resin waste material that has been discharged in at least one step among a resin polymerization step, a resin compounding step, and a resin molding step.

[7] The waste material shape adjustment method according to any one of [4] to [6], wherein the resin waste material contains a polyamide-based resin.

[8] A waste material transportation method comprising a transportation step of transporting a waste material that has undergone shape adjustment by the waste material shape adjustment method according to any one of [1] to [7].

[9] The waste material transportation method according to [8], wherein a truck and/or a ship is used as a transportation means.

[10] A resin composition production method comprising:

a regeneration step of regenerating a resin from a resin waste material that has undergone shape adjustment by the waste material shape adjustment method according to any one of [4] to [7]; and

a compounding step of compounding a regenerated resin obtained in the regeneration step to obtain a resin composition.

[11] A resin composition production method comprising:

a transportation step of transporting a resin waste material that has undergone shape adjustment by the waste material shape adjustment method according to any one of [4] to [7];

a regeneration step of regenerating a resin from the resin waste material that has been transported in the transportation step; and

a compounding step of compounding a regenerated resin obtained in the regeneration step to obtain a resin composition.

(Advantageous Effect)

According to the present disclosure, it is possible to provide a waste material shape adjustment method that can improve transportation efficiency and regeneration efficiency of a waste material that is to be recycled, a transportation method for a waste material that has undergone shape adjustment by this waste material shape adjustment method, and a resin composition production method in which a resin waste material that has undergone shape adjustment by this waste material shape adjustment method is used.

BRIEF DESCRIPTION OF THE DRAWINGS

In the accompanying drawings:

FIG. 1 is a photograph of a waste material that has undergone shape adjustment in Example 1;
FIG. 2 is a photograph of a waste material that has undergone shape adjustment in Example 2; and
FIG. 3 is a photograph of a waste material that has undergone shape adjustment in Comparative Example 1.

DETAILED DESCRIPTION

The following provides a detailed description of an embodiment of the present disclosure (hereinafter, referred to as the "present embodiment"). It should be noted that the present embodiment is an example for describing the present disclosure and that the present disclosure is not limited to just this embodiment. In other words, various modifications can be made to the present disclosure without deviating from the essence thereof.

<Waste material shape adjustment method>

A waste material shape adjustment method of the present embodiment is a method of adjusting a shape of a waste material that is to be recycled and a feature thereof is that the method includes adjusting the shape of the waste material such that a ratio $W_1/W_2$ of bulk density $W_1$ of the waste material relative to bulk density $W_2$ of the waste material is 0.55 or more, given that the bulk density $W_1$ is defined as "mass ($kg/m^3$) of the waste material per 1 $m^3$ of a container in a situation in which the waste material undergoes shape adjustment and is packed into the container" and the bulk density $W_2$ is defined as "mass ($kg/m^3$) of the waste material per 1 $m^3$ of a container in a situation in which the waste material undergoes shape adjustment, is subsequently ground to a mass of 50 g or less per granule, and is then packed into the container".

Note that the term "container" as used in the present disclosure refers to a packaging that can accommodate the waste material in order to store and transport the waste material. The shape of the container may change slightly in accordance with the shape of contents (waste material), but the capacity of the container is considered to be constant. Although no specific limitations are placed on the size of the container, the container may, for example, be a flexible container (M-1A produced by Tani Industry Co., Ltd.) having a capacity of $1.0\,m^3$, a diameter of 1,100 mm, a height of 1,100 mm, and a load resistance of 1,000 kg.

Moreover, "packing" of the waste material into the container referred to in the present disclosure means accommodating as much as possible of the waste material in the container within the storage capacity of the container, and no specific stipulations are made as to the method by which the waste material is loaded into the container, the packing order, and so forth.

The method by which the waste material is "packed" into the container is described below using a flexible container as an example. The waste material is loaded into the flexible container, within the storage capacity thereof, while the flexible container is placed on the ground. Thereafter, the flexible container is lifted using a forklift and the weight of the waste material itself is used to fill in gaps between the waste material. The flexible container is then placed back on the ground, and then as much as possible of the waste material is loaded into space that has opened up to the extent that an opening of the flexible container can be bound.

No specific limitations are placed on the grinding of the waste material so long as it is grinding until a number-average of the mass per granule of the waste material after grinding is less than 50 g. However, it is preferable to adopt a grinding method that, with regard to the mass of individual granules of the waste material after grinding, results in granules of 10 g to 50 g per granule constituting 90% or more of the overall waste material. This restricts variation of $W_2$ and tends to stabilize the range of $W_1/W_2$. The grinding device and conditions should be selected as appropriate depending on the type of waste material, the size of the waste material, and so forth.

The bulk density ratio $W_1/W_2$ is a parameter that indicates the degree of shape adjustment of the waste material through comparison of the bulk density $(W_2)$ in a situation in which the waste material has been ground so as to pack as much as possible of the waste material into the container and the bulk density $(W_1)$ in a situation in which the waste material has undergone shape adjustment.

$W_1/W_2$ is 0.55 or more, preferably 0.60 or more, and more preferably 0.65 or more. When $W_1/W_2$ is within any of the ranges set forth above, a large amount of the waste material can be carried in one go, and it is possible to increase transportation efficiency when the waste material is transported to a facility such as a recycling plant and regeneration efficiency when the waste material is regenerated at a recycling plant or the like. The upper limit for $W_1/W_2$ is not specifically limited and may be 1.00 or less, may be 0.95 or less, or may be 0.90 or less, for example.

$W_1/W_2$ can, more specifically, be calculated by a method subsequently described in the EXAMPLES section.

The means of shape adjustment of the waste material (technique by which the shape and/or size of the waste material is changed), conditions of each means (temperature, pressure, time, etc.), and the used device are not specifically limited and should be selected as appropriate depending on the type of waste material, the shape and size of the waste material in a situation in which the waste material shape adjustment method of the present embodiment has not been adopted, the condition of the waste material, and so forth. The means of shape adjustment of the waste material may be fragmentation, melt extrusion, cooling of a melt using a formwork resulting in a specific shape, a combination thereof, or the like, for example. Particularly in the case of a resin waste material described further below, it is preferable to adopt a technique of cooling a melt using a formwork resulting in a specific shape because this makes it easy to adjust the bulk density ratio $W_1/W_2$ to within any of the previously described ranges. Moreover, by performing shape adjustment in this manner, it is possible to keep the influence of oxidative degradation, water absorption, etc. constant among the waste material in a situation in which the waste material is transported or is stored prior to regeneration, thereby resulting in more uniform regenerated product quality. Furthermore, oxidative degradation and water absorption of the waste material tend to be suppressed compared to when secondary shape adjustment such as grinding has been performed, and this tends to inhibit deterioration of quality of a regenerated product and maintain good quality.

The specific shape of the waste material that has undergone shape adjustment is preferably a cylinder, plate, cuboid, or cube. Performing shape adjustment resulting in such a shape is preferable because it facilitates packing into the container and also tends to enable prevention of load collapse during transportation in the subsequently described transportation method.

Although no specific limitations are placed on the mass per piece of the waste material that has undergone shape adjustment by the waste material shape adjustment method of the present embodiment, from a viewpoint of portability and operability, this mass is preferably not less than 50 g and not more than 50 kg, more preferably not less than 50 g and not more than 30 kg, even more preferably not less than 50 g and not more than 25 kg, and further preferably not less than 50 g and not more than 20 kg.

Note that the mass per piece of the waste material that has undergone shape adjustment is taken to be the average mass of 5 or more pieces of the waste material.

[Waste material]

No specific limitations are placed on the waste material for which the waste material shape adjustment method of the present embodiment is adopted so long as it is a waste material that is to be subjected to recycling. For example, various types of used products, and also non-conforming products (products having a faulty shape, products containing foreign matter, etc.), offcuts, scraps, etc. arising in production/processing steps of various products may be used as the waste material. The type of recycling is not specifically limited and may be any of chemical recycling, material recycling, and thermal recycling.

The waste material may be of a single type or may be a combination of a plurality of types.

The shape and size of individual pieces of the waste material in a situation in which the waste material shape adjustment method of the present embodiment has not been adopted is not specifically limited and may be any of various shapes and sizes.

The type (material) of the waste material may be a resin, metal, wood, or the like, for example, without any specific limitations, but a resin waste material having a resin as a main component is preferable from a viewpoint of ease of regeneration.

The term "main component" as used in the present disclosure refers to a component that is contained in a proportion of more than 50 mass% among 100 mass% of the waste material, and the main component is preferably contained in a proportion of 70 mass% or more, more preferably contained in a proportion of 90 mass% or more, and particularly preferably contained in a proportion of 100 mass%.

Examples of the resin waste material include used resin products (for example, household goods and various mechanical components such as automotive components, electrical and electronic components, building supplies, industrial components, and medical components), and also non-conforming products (producing having a faulty shape, products containing foreign matter or black spots, etc.), offcuts, scraps, etc. arising in production/processing steps of these resin products, but are not limited thereto. Moreover, the resin waste material may be a foamed resin waste material or may be a non-foamed resin material.

The shape of the resin waste material after shape adjustment can take various forms depending on the step where the waste material arises (i.e., the source of the waste material), such as depending on which production/processing step the waste material is discharged from and in what manner the waste material is discharged. For example, the shape may be a cylinder, plate, cuboid, or cube shape obtained through melting and subsequent cooling and solidification of a resin, may be a shape resulting from a resin being extruded from an extruder and then being disposed of in that form with a shape such as a plate shape without undergoing cutting, or a shape resulting from a resin in a resin waste material being melted to obtain a melt that is then discharged into a formwork having a cylinder, plate, cuboid, or cube shape and is cooled and solidified to adjust the shape.

The type of resin that is contained in the resin waste material is not specifically limited and may be a thermoplastic resin or a thermosetting resin.

Examples of the thermoplastic resin include, but are not specifically limited to, a polyamide-based resin (polyamide 6, polyamide 66, polyamide 610, polyamide 612, polyamide 6I, polyamide 66/6, polyamide 66/610, polyamide 66/6I, etc.), a polyphenylene ether-based resin, a polyolefin-based resin (polyethylene, polypropylene, etc.), a polyester-based resin (polyethylene terephthalate, polybutylene terephthalate, etc.), a polyacetal-based resin, a polycarbonate-based resin, a polystyrene-based resin (polystyrene, acrylonitrile-styrene copolymer, acrylonitrile-butadiene-styrene copolymer, etc.), a poly(meth)acrylic-based resin (polyethyl (meth)acrylate, polymethyl (meth)acrylate, etc.), and a polyvinyl chloride-based resin. In particular, a case in which the resin waste material contains a polyamide-based resin is preferable since physical properties of a polyamide-based resin are significantly affected by water absorption, and thus even in a situation in which the resin waste material is exposed to a high humidity environment when it is adopted in the subsequently described waste material transportation method or resin composition production method, the effect of water absorption tends to be uniform among the waste material.

Examples of the thermosetting resin include an epoxy-based resin, a phenolic resin, a polyurethane-based resin, an unsaturated polyester-based resin, a melamine-based resin, and so forth.

Although the resin that is contained in the waste material may all be of the same type or may be a combination of different types, it is preferably of the same type from a viewpoint that the means of shape adjustment of the waste material can be simplified and shape adjustment becomes easier.

The phrase "same type of resin" means that a resin component, exclusive of additives such as a plasticizer and a thermal stabilizer, is formed of the same resin in classification according to JIS K-6899-1:2006. More specifically, resins that are categorized as the same resin using a combination of "5. Abbreviated terms relating to homopolymer materials, copolymer materials, and natural polymer materials" and "6. Symbols indicating characteristics" in the aforementioned JIS standard are considered to be of the same type.

The content of the resin in 100 mass% of the resin waste material is preferably 70 mass% to 100 mass%, more preferably 90 mass% to 100 mass%, and particularly preferably 100 mass% from a viewpoint that the means of shape adjustment of the waste material can be simplified and shape adjustment becomes easier.

The resin waste material may contain other components such as flame retardants, antioxidants, ultraviolet absorbers, thermal stabilizers, plasticizers, lubricants, coloring agents, compatibilizers, and fillers (glass fiber, carbon fiber, mineral fillers such as wollastonite and talc, etc.), for example.

In a case in which the resin waste material is a waste material that has been disposed of in a production/processing step of a resin product, the resin waste material may be a waste material that has been discharged from just one step or may be a combination of waste materials that have been discharged from a plurality of steps.

The resin waste material that has been disposed of in a production/processing step of a resin product may, for example, be a resin waste material that has been discharged in one or more steps among production/processing steps of the resin product including a resin polymerization step, a compounding step of compounding a resin (synthesized virgin resin, regenerated resin regenerated through recycling, etc.) and other components (various additives, etc.), and a molding step of molding a resin (or a resin composition) to obtain a resin molded product.

A resin waste material that has been discharged in a resin polymerization step typically does not contain components other than the polymerized resin. Therefore, such resin waste materials often have consistent chemical and physical properties and tend to make it easy to achieve uniform quality in a recycled material when the resin waste material is recycled.

<Waste material transportation method>

A waste material that has undergone shape adjustment by the waste material shape adjustment method of the present embodiment set forth above can be transported by any method. Shape adjustment by the waste material shape adjustment method of the present embodiment makes it possible to improve transportation efficiency of the waste material even without performing secondary shape adjustment such as grinding. More specifically, it becomes possible to achieve excellent loading efficiency during transportation even without performing additional shape adjustment such as grinding.

Although no specific limitations are made, a waste material transportation method of the present embodiment is suitably a method in which a large quantity of the waste material is carried all at once by a transportation means such as a truck or a ship in terms that this enables efficient transportation without performing secondary shape adjustment such as grinding. Moreover, as a result of the waste material having undergone shape adjustment by the waste material shape adjustment method of the present embodiment set forth above, it is possible to maintain uniformity among the waste material under the influence of oxidative degradation, water absorption, or the like of the waste material even when transportation involves movement/storage for a long time, and this tends to enable uniform regenerated product quality in regeneration.

<Resin composition production method>

A resin composition production method of the present embodiment includes a regeneration step of regenerating a resin from a resin waste material that has undergone shape adjustment by the waste material shape adjustment method of the present embodiment set forth above and a compounding step of compounding a regenerated resin that has been obtained by the regeneration step to obtain a resin composition. The resin composition production method of the present embodiment may alternatively include a transportation step of transporting the resin waste material prior to the regeneration step. In other words, in another configuration, the resin composition production method of the present embodiment includes a transportation step of transporting a resin waste material that has undergone shape adjustment by the waste material shape adjustment method of the present embodiment set forth above, a regeneration step of regenerating a resin from the resin waste material that has been transported by the transportation step, and a compounding step of compounding a regenerated resin that has been obtained by the regeneration step to obtain a resin composition.

As a result of a resin waste material that has undergone shape adjustment by the waste material shape adjustment method of the present embodiment set forth above being used in the resin composition production method of the present embodiment, the resin composition production method of the present embodiment has excellent waste material transportation efficiency and regeneration efficiency and increases freedom and flexibility in waste material handling during recycling. For example, in thermal recycling, the omission of a grinding step leads to improvement of energy efficiency and reduction of cost.

Besides the steps described above, the resin composition production method of the present embodiment may include other steps such as a washing step of washing the waste material and a step of separating impurities in the waste material.

The transportation step is a step of transporting a resin waste material that has undergone shape adjustment by the waste material shape adjustment method of the present embodiment set forth above to a location where the regeneration step is to be performed (for example, a facility such as a recycling plant).

The method by which the resin waste material is transported is not specifically limited and can be the waste material transportation method of the present embodiment set forth above, for example.

The regeneration step is a step of regenerating a resin from the resin waste material that has undergone shape adjustment by the waste material shape adjustment method of the present embodiment set forth above or that has been transported by the transportation step to obtain a regenerated resin.

The method by which the resin is regenerated is not specifically limited and may, for example, be a material recycling method such as a method of separating the target resin from the resin waste material or a chemical recycling method such as a method of decomposing the resin waste material to obtain a raw material monomer of the target resin and subsequently using the raw material monomer that has been obtained to repolymerize the target resin.

Conditions and reagents in each reaction in regeneration of the resin, such as the used device, temperature, and pressure, should be selected as appropriate according to the target resin.

The compounding step is a step of adding and compounding other components with the regenerated resin that has been obtained by the regeneration step to obtain a resin composition.

The other components that are added are not specifically limited and should be selected as appropriate according to the desired physical properties of the resin composition, etc. For example, in a situation in which the regenerated resin has been regenerated by a material recycling method, a virgin resin that is of the same type as the regenerated resin may be added into order to further stabilize physical properties of the resin.

Conditions of the compounding such as the used device, temperature, and pressure should be set as appropriate according to constituent components (regenerated resin and other components) of the resin composition.

EXAMPLES

The following provides a more specific description of the present disclosure through examples. However, the present disclosure is not limited to the following examples.

Used measurement and evaluation methods were as follows.

<Shape adjustment (bulk density ratio $W_1/W_2$)>

A waste material that had undergone shape adjustment in each example or comparative example was packed into a container (capacity: 1.0 m$^3$; diameter: 1,100 mm; height: 1,100 mm; load resistance: 1,000 kg (flexible container "M-1A" produced by Tani Industry Co., Ltd.)), and the mass of the waste material inside of the container was measured. Five measurements were performed, and an average value of the measurements was taken to be the bulk density $W_1$ (kg/m$^3$) of the waste material.

Next, a waste material that had undergone shape adjustment in each example or comparative example was ground using a grinding machine (DAS-54 produced by Daiko Seiki Co., Ltd.) such that the mass of individual granules of the waste material was less than 50 g. The ground waste material was packed into the same type of container as described above (capacity: 1.0 m$^3$; diameter: 1,100 mm; height: 1,100 mm; load resistance: 1,000 kg (flexible container "M-1A" produced by Tani Industry Co., Ltd.)), and the mass of the waste material inside of the container was measured. Five measurements were performed, and an average value of the measurements was taken to be the bulk density $W_2$ (kg/m$^3$) of the waste material.

A bulk density ratio $W_1/W_2$ was calculated from the determined bulk densities $W_1$ and $W_2$.

<Mass per piece of waste material>

For a waste material that had undergone shape adjustment in each example or comparative example, the masses of at least 10 pieces of the waste material were measured, and an average value (kg) of the masses was calculated.

<Transportation efficiency>

For a waste material that had undergone shape adjustment in each example or comparative example and a waste material obtained when a waste material that had undergone shape adjustment in each example or comparative example was ground by the method described above in <Shape adjustment (bulk density ratio $W_1/W_2$)>, the loading efficiency of each waste material in a transportation vehicle was determined by the following formula.

Loading efficiency (%) = (Mass of waste material loaded in transportation vehicle/Loadable mass in transportation vehicle) $\times$ 100

The loading efficiency difference between the waste material that had undergone shape adjustment and the waste material that had undergone shape adjustment and subsequent grinding was calculated (= loading efficiency of shape adjusted and subsequently ground waste material - loading efficiency of shape adjusted waste material), and transportation efficiency was evaluated by the following standard.

A (Excellent): Loading efficiency difference of 45% or less
B (Good): Loading efficiency difference of more than 45% and not more than 60%
C (Poor): Loading efficiency difference of more than 60%

<Regeneration efficiency>

For a waste material that had undergone shape adjustment in each example or comparative example and a waste material obtained when a waste material that had undergone shape adjustment in each example or comparative example was ground by the method described above in <Shape adjustment (bulk density ratio $W_1/W_2$)>, a "swap count of containers (capacity: 1.0 $m^3$; diameter: 1,100 mm; height: 1,100 mm; load resistance: 1,000 kg (flexible container "M-1A" produced by Tani Industry Co., Ltd.)) required for supplying 10 tons of the waste material in recycling of the waste material (i.e., the number of times that a container that has been emptied though supply of accommodated waste material is swapped with a container containing waste material)" was defined as the container swapping frequency (times), and this container swapping frequency was determined for each waste material.
A container swapping frequency difference between the waste material that had undergone shape adjustment and the waste material that had undergone shape adjustment and subsequent grinding was calculated (= container swapping frequency of shape adjusted waste material - container swapping frequency of shape adjusted and subsequently ground waste material), and regeneration efficiency was evaluated by the following standard.

A (Excellent): Container swapping frequency difference of 20 times or less
B (Good): Container swapping frequency difference of more than 20 times and not more than 25 times
C (Poor): Container swapping frequency difference of more than 25 times

<Necessity of grinding before transportation>

For a waste material that had undergone shape adjustment in each example or comparative example and a waste material obtained when a waste material that had undergone shape adjustment in each example or comparative example was ground by the method described above in <Shape adjustment (bulk density ratio $W_1/W_2$)>, a judgment as to the necessity of grinding before transportation was made based on the evaluation result of transportation efficiency evaluated by the method described above in <Transportation efficiency>. A judgment that grinding is "Not necessary" was made in a case in which the evaluation result for transportation efficiency was "A (Excellent)" or "B (Good)", whereas a judgment that grinding is "Necessary" was made in a case in which the evaluation result for transportation efficiency was "C (Poor)".

[Example 1]

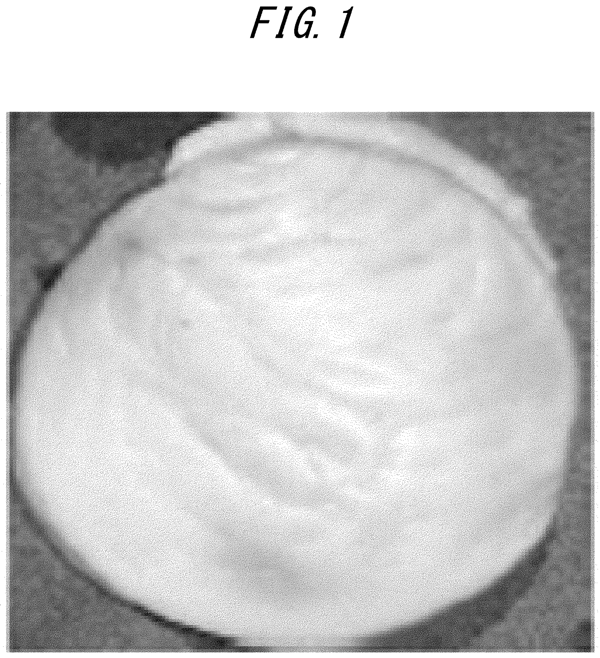

A waste material (main component: PA 66; filler: none) that had been discharged in a polymerization step of polyamide 66 (PA 66) was subjected to shape adjustment by the following procedure. A photograph of the waste material after shape adjustment (shape: roughly cylindrical shape) is presented in FIG. 1.
The polyamide 66 waste material, while in a molten state, was received in a metal frame (diameter: 30 cm; height: 10 cm) yielding a cylinder shape and was cooled to adjust the shape of the waste material.
Various measurements and evaluations are shown in Table 1. Note that the mass per piece of the waste material that had undergone shape adjustment was 7 kg.

[Example 2]

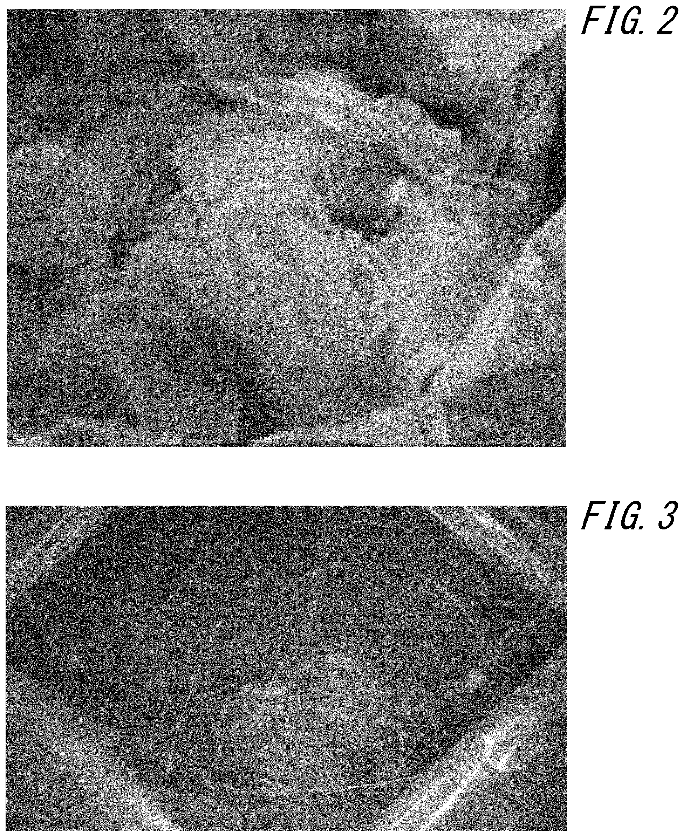

A waste material (main component: PA 610; filler: none) that had been discharged in a polymerization step of polyamide 610 (PA 610) was subjected to shape adjustment by the following procedure. A photograph of the waste material after shape adjustment (shape: plate-like shape resulting from assembly of strands) is presented in FIG. 2.
The polyamide 610 waste material, while in a molten state, was shaped into strands, these strands were received in a metal frame (length: 100 cm; width: 10 cm; height: 10 cm) yielding a plate shape, and the strands were cooled to adjust the shape of the waste material.

Various measurements and evaluations are shown in Table 1. Note that the mass per piece of the waste material that had undergone shape adjustment was 11 kg.

[Example 3]

A waste material (main component: PA 6; filler: none) that had been discharged in a compounding step of compounding polyamide 6 (PA 6) and another component (lubricant) was subjected to shape adjustment by the following procedure.
The polyamide 6 waste material, while in a molten state, was shaped into strands, these strands were received in a metal frame (length: 50 cm; width: 10 cm; height: 10 cm) yielding a cuboid shape, and the strands were cooled to adjust the shape of the waste material (shape: roughly cuboid shape).
Various measurements and evaluations are shown in Table 1. Note that the mass per piece of the waste material that had undergone shape adjustment was 5 kg.

[Example 4]

A waste material (main component: PA 66/6I; filler: present (glass fiber)) that had been discharged in a compounding step of compounding polyamide 66/6I (PA 66/6I) and other components (lubricant and coloring agent) was subjected to shape adjustment by the following procedure.
The polyamide 66/6I waste material, while in a molten state, was shaped into strands, these strands were received in a metal frame (length: 50 cm; width: 10 cm; height: 10 cm) yielding a cuboid shape, and the strands were cooled to adjust the shape of the waste material (shape: roughly cuboid shape).
Various measurements and evaluations are shown in Table 1. Note that the mass per piece of the waste material that had undergone shape adjustment was 6 kg.

[Example 5]

A waste material (main component: PA 66/PPE; filler: present (glass fiber)) that had been discharged in a molding step of molding a polyamide 66/polyphenylene ether (PA 66/PPE) resin composition was subjected to shape adjustment by the following procedure.
The polyamide 66/polyphenylene ether waste material, while in a molten state, was received in a metal frame (length: 10 cm; width: 10 cm; height: 10 cm) yielding a cube shape and was cooled to adjust the shape of the waste material (shape: roughly cube shape).
Various measurements and evaluations are shown in Table 1. Note that the mass per piece of the waste material that had undergone shape adjustment was 1 kg.

[Example 6]

A waste material (main component: PA 66/6I; filler: present (glass fiber)) that had been discharged in a molding step of molding polyamide 66/6I (PA 66/6I) was subjected to shape adjustment by the following procedure.
The polyamide 66/6I waste material, while in a molten state, was received in a metal frame (length: 8 cm; width: 8 cm; height: 8 cm) yielding a cube shape and was cooled to adjust the shape of the waste material (shape: roughly cube shape).
Various measurements and evaluations are shown in Table 1. Note that the mass per piece of the waste material that had undergone shape adjustment was 0.7 kg.

[Example 7]

A waste material obtained by mixing the waste material used in Example 1 (main component: PA 66; filler: none) and the waste material used in Example 2 (main component: PA 610; filler: none) in a ratio of 1:1 was subjected to shape adjustment by the following procedure.
The waste materials were each melted, were received in a metal frame (diameter: 30 cm; height: 30 cm) yielding a cylinder shape, and were cooled to adjust the shape of the waste materials (shape: roughly cylindrical shape).
Various measurements and evaluations are shown in Table 1. Note that the mass per piece of the waste material that had undergone shape adjustment was 20 kg.

[Comparative Example 1]

A waste material (main component: PA 66; filler: none) that had been discharged in a polymerization step of polyamide 66 (PA 66) was subjected to shape adjustment by the following procedure. A photograph of the waste material after shape adjustment is presented in FIG. 3.

The polyamide 66 waste material, while in a molten state, was cooled into the form of strands, and these strands were cut to a fixed size (diameter: approximately 0.4 cm; length: approximately 300 cm) to adjust the shape of the waste material (shape: strand shape).

Various measurements and evaluations are shown in Table 1. Note that the mass per piece of the waste material that had undergone shape adjustment was 0.04 kg.

[Comparative Example 2]

A waste material (main component: PA 66/6I; filler: present (glass fiber)) that had been discharged in a compounding step of compounding polyamide 66/6I (PA 66/6I) and other components (lubricant and coloring agent) was subjected to shape adjustment by the following procedure.

The polyamide 66/6I waste material, while in a molten state, was cooled into the form of strands, and these strands were cut to a fixed size (diameter: approximately 0.4 cm; length: approximately 160 cm) to adjust the shape of the waste material (shape: strand shape).

Various measurements and evaluations are shown in Table 1. Note that the mass per piece of the waste material that had undergone shape adjustment was 0.03 kg.

[Comparative Example 3]

A waste material (main component: PA 66/PPE; filler: present (glass fiber)) that had been discharged in a molding step of molding a polyamide 66/polyphenylene ether (PA 66/PPE) resin composition was subjected to shape adjustment by the following procedure.

The polyamide 66/polyphenylene ether waste material, while in a molten state, was cooled into the form of strands, and these strands were cut to a fixed size (diameter: approximately 0.4 cm; length: approximately 300 cm) to adjust the shape of the waste material (shape: strand shape).

Various measurements and evaluations are shown in Table 1. Note that the mass per piece of the waste material that had undergone shape adjustment was 0.06 kg.

[Table 1]

| | | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|---|
| Waste material | Shape adjustment (bulk density ratio $W_1/W_2$) | | 0.67 | 0.58 | 0.65 | 0.60 | 0.71 | 0.73 | 0.63 | 0.25 | 0.30 | 0.38 |
| | Mass per piece of waste material [kg] | | 7 | 11 | 5 | 6 | 1 | 0.7 | 20 | 0.04 | 0.03 | 0.06 |
| | Type (main component) | PA 66 | ✔ | | | | | | ✔ (50%) | ✔ | | |
| | | PA 610 | | ✔ | | | | | ✔ (50%) | | | |
| | | PA 6 | | | | | | | | | | |
| | | PA 66/6I | | | | ✔ | ✔ | ✔ | | | ✔ | |
| | | PA 66/PPE | | | | | ✔ | | | | | ✔ |
| | Presence of filler | | No | No | No | Yes | Yes | Yes | No | No | Yes | Yes |
| | Step where waste material arises | Polymerization step | ✔ | ✔ | | | | | | | | |
| | | Compounding step | | | ✔ | ✔ | | | | | ✔ | |
| | | Molding step | | | | | | | | | | |
| Effects | Transportation efficiency | | A | A | A | A | A | A | A | C | C | C |
| | Regeneration efficiency | | A | A | A | A | A | A | A | C | C | C |
| | Necessity of grinding before transportation | | Not necessary | Not necessary | Not necessary | Not necessary | Not necessary | Not necessary | Not necessary | Necessary | Necessary | Necessary |

INDUSTRIAL APPLICABILITY

Through the waste material shape adjustment method according to the present disclosure, it is possible to improve transportation efficiency and regeneration efficiency of a waste material that is to be recycled. Moreover, the resin composition production method according to the present disclosure uses a resin waste material that has undergone shape adjustment by the waste material shape adjustment method according to the present disclosure, and thus has excellent transportation efficiency and regeneration efficiency, can improve energy efficiency, and can reduce production cost.

**Claims**

1. A waste material shape adjustment method that is a method of adjusting a shape of a waste material that is to be recycled, comprising adjusting the shape of the waste material such that a ratio $W_1/W_2$ of bulk density $W_1$ of the waste material relative to bulk density $W_2$ of the waste material is 0.55 or more, given that the bulk density $W_1$ is defined as "mass of the waste material per 1 $m^3$ of a container, in units of $kg/m^3$, in a situation in which the waste material undergoes shape adjustment and is packed into the container" and the bulk density $W_2$ is defined as "mass of the waste material per 1 $m^3$ of a container, in units of $kg/m^3$, in a situation in which the waste material undergoes shape adjustment, is subsequently ground to a mass of less than 50 g per granule, and is then packed into the container".

2. The waste material shape adjustment method according to claim 1, wherein the waste material that has undergone shape adjustment has a mass of not less than 50 g and not more than 50 kg per piece.

3. The waste material shape adjustment method according to claim 1, wherein the waste material that has undergone shape adjustment has a cylinder, plate, cuboid, or cube shape.

4. The waste material shape adjustment method according to claim 1, wherein the waste material is a resin waste material.

5. The waste material shape adjustment method according to claim 4, comprising a step of melting a resin in the resin waste material to obtain a melt of the resin waste material, discharging the melt into a formwork, and cooling and solidifying the melt, wherein the formwork has a cylinder, plate, cuboid, or cube shape.

6. The waste material shape adjustment method according to claim 4, wherein the resin waste material is a resin waste material that has been discharged in at least one step among a resin polymerization step, a resin compounding step, and a resin molding step.

7. The waste material shape adjustment method according to claim 6, wherein the resin waste material contains a polyamide-based resin.

8. A waste material transportation method comprising a transportation step of transporting a waste material that has undergone shape adjustment by the waste material shape adjustment method according to any one of claims 1 to 7.

9. The waste material transportation method according to claim 8, wherein a truck and/or a ship is used as a transportation means.

10. A resin composition production method comprising:

   a regeneration step of regenerating a resin from a resin waste material that has undergone shape adjustment by the waste material shape adjustment method according to any one of claims 4 to 7; and
   a compounding step of compounding a regenerated resin obtained in the regeneration step to obtain a resin composition.

11. A resin composition production method comprising:

   a transportation step of transporting a resin waste material that has undergone shape adjustment by the waste material shape adjustment method according to any one of claims 4 to 7;
   a regeneration step of regenerating a resin from the resin waste material that has been transported in the transportation step; and

a compounding step of compounding a regenerated resin obtained in the regeneration step to obtain a resin composition.

FIG. 1

FIG. 2

FIG. 3

## INTERNATIONAL SEARCH REPORT

| International application No. |
|---|
| **PCT/JP2024/023970** |

| A. | CLASSIFICATION OF SUBJECT MATTER |
|---|---|

*C08J 11/12*(2006.01)i
FI: C08J11/12 ZAB

According to International Patent Classification (IPC) or to both national classification and IPC

| B. | FIELDS SEARCHED |
|---|---|

Minimum documentation searched (classification system followed by classification symbols)

C08J11/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2004-331912 A (POWER SYSTEM KK) 25 November 2004 (2004-11-25) paragraphs [0017]-[0023], fig. 1 | 1-5 |
| Y | | 6-11 |
| Y | WO 2021/200892 A1 (MITSUBISHI GAS CHEMICAL COMPANY, INC.) 07 October 2021 (2021-10-07) paragraphs [0024]-[0036], fig. 1 | 6-11 |
| Y | JP 2017-14316 A (GREEN PLA CO., LTD.) 19 January 2017 (2017-01-19) paragraphs [0033]-[0035] | 10-11 |
| Y | JP 2013-241608 A (UBE INDUSTRIES, LTD.) 05 December 2013 (2013-12-05) paragraphs [0063]-[0064] | 10-11 |
| A | JP 3086562 U (SIGMA KIKI CO., LTD.) 28 June 2002 (2002-06-28) | 1-11 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 September 2024** | **24 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/023970**

| Patent document cited in search report | | | Publication date (day/month/year) | Patent family member(s) | | | Publication date (day/month/year) |
|---|---|---|---|---|---|---|---|
| JP | 2004-331912 | A | 25 November 2004 | (Family: none) | | | |
| WO | 2021/200892 | A1 | 07 October 2021 | CN | 115335443 | A | |
| | | | | KR | 10-2022-0161265 | A | |
| JP | 2017-14316 | A | 19 January 2017 | (Family: none) | | | |
| JP | 2013-241608 | A | 05 December 2013 | US | 2007/0054970 | A1 | |
| | | | | paragraphs [0065]-[0074] | | | |
| | | | | EP | 1674532 | A1 | |
| | | | | KR | 10-2006-0109905 | A | |
| | | | | CN | 1894341 | A | |
| JP | 3086562 | U | 28 June 2002 | (Family: none) | | | |

Form PCT/ISA/210 (patent family annex) (July 2022)

**REFERENCES CITED IN THE DESCRIPTION**

**Patent documents cited in the description**

- JP 2010509413 A